# EUROPEAN PATENT APPLICATION

(11) **EP 1 643 516 A1**
(43) Date of publication of application: **05.04.2006**
(21) Application number: 05021504.5
(22) Date of filing: 30.09.2005
(51) Int. Cl.: H01G 9/20, H01L 31/04

(54) **Photoelectrode for dye sensitizing solar cell or organic solar cell**

(30) Priority: 30.09.2004 JP 2004286734
(71) Applicant: ENPLAS CORPORATION, Kawaguchi-shi, Saitama 332-0034 (JP)
(72) Inventor: Miyoshi, Kozo, Kitamoto-shi Saitama 364-0014 (JP)
(74) Representative: Manitz, Finsterwald & Partner GbR

(57) **Abstract**

In a dye sensitizing solar cell 1 wherein an electrolyte 4 is filled in a space between a photoelectrode 2 and a counter electrode 3, recesses 8 are formed in the surface 5a of a substrate member 5 of the photoelectrode 2, and a transparent electrode film 6 is formed on the surface of the substrate member 5 to form recessed portions 10 in the transparent electrode film 6. On the transparent electrode film 6 of the photoelectrode 2 with this construction, a porous semiconductor electrode film 7 is formed, and a sensitizing dye is absorbed and carried on the porous semiconductor electrode film 7.

## Description

### BACKGROUND OF THE INVENTION

### Field of the Invention

The present invention generally relates to a photoelectrode used as a component of a dye sensitizing solar cell or an organic solar cell, and a dye sensitizing solar cell having the photoelectrode.

### Description of the Prior Art

In recent years, from the point of view of environmental issues, solar cells for converting light energy to electric energy have been widely noticed. In particular, dye sensitizing solar cells have been widely noticed since the costs for producing them can be low. Originally, dye sensitizing solar cells are not intended for practical use since they have a low photoelectric transfer efficiency. Recently, there has been developed a technique for increasing the surface area of a semiconductor electrode to cause the electrode to absorb a large amount of dye to conspicuously enhance the photoelectric transfer efficiency of a dye sensitizing solar cell (see, e.g., Japanese Patent Unexamined Publication No. 5-504023 (National Publication of Translated Version of PCT/EP91/00734)).

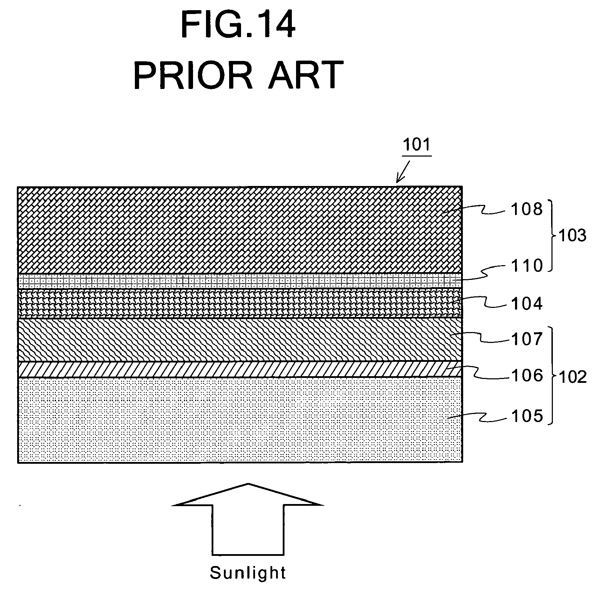

As an example of a conventional dye sensitizing solar cell using such a technique, there is known a dye sensitizing solar cell 101 shown in FIG. 14. The dye sensitizing solar cell 101 schematically shown in FIG. 14 comprises a photoelectrode substrate 102, a counter electrode substrate 103, and an electrolytic solution 104 filled in a space therebetween.

The photoelectrode substrate 102 comprises a substrate member 105, a transparent electrode film 106 formed on the surface of the substrate member 105, and a porous semiconductor electrode film 107 of titanium oxide or the like formed on the surface of the transparent electrode film 106, the porous semiconductor electrode film 107 absorbing a sensitizing dye. The porous semiconductor electrode film 107 is formed by a method comprising the steps of applying a suspension containing semiconductor particles on the transparent electrode film 106, and drying and burning it.

The counter electrode substrate 103 comprises a counter substrate member 108, and a counter electrode 110 formed on the counter substrate member 108 by coating a catalyst such as platinum thereon.

The substrate member 105 and the counter substrate member 108 are arranged so that the counter electrode 110 faces the porous semiconductor electrode film 107 at an interval. The electrolytic solution 104 is filled in the space between the counter electrode 110 and the porous semiconductor electrode film 107 to form the dye sensitizing solar cell 101.

In such a dye sensitizing solar cell 101, if the sensitizing dye absorbed on the porous semiconductor electrode film 107 is irradiated with sunlight, the sensitizing dye absorbs light in a visible region to beexited. Then, electrons produced by the excitation of the sensitizing dye move in the porous semiconductor electrode film 107 to reach the transparent electrode film 106. The electrons moving to the transparent electrode film 106 move to the counter electrode 110 via an external circuit (not shown) which electrically connects the transparent electrode film 106 to the counter electrode 110. Then, the electrons moving to the counter electrode 110 are carried on ions in the electrolytic solution 104 to return to the sensitizing dye of the porous semiconductor electrode film 107. Such an operation is repeated to extract electric energy.

In the dye sensitizing solar cell 101 with this construction, the moving speed of electrons, which are produced by the excitation of the sensitizing dye, to the transparent electrode film 106 has an influence on the photoelectric transfer efficiency thereof. If the movement of electrons therein is not rapidly carried out, the electrons are recombined with positive holes to decrease the number of electrons capable of moving to the transparent electrode film 106, so that there is a problem in that the photoelectric transfer efficiency deteriorates.

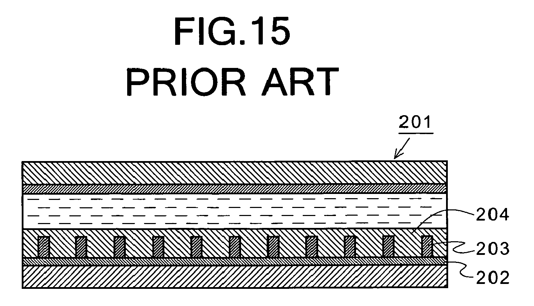

In order to solve such a problem of the dye sensitizing solar cell 101, a dye sensitizing solar cell 201 shown in FIG. 15 has been developed. In the dye sensitizing solar cell 201 shown in this figure, conductive protruding portions 203 are formed on the surface of an electrode layer 202 on the side of a photoelectrode, and the electrode layer 202 and the conductive protruding portions 203 are covered with a metal oxide semiconductor layer 204 so that electrons produced by the excitation of a sensitizing dye absorbed on the metal oxide semiconductor layer 204 can rapidly move to the electrode layer 202 to improve the photoelectric transfer efficiency (see Japanese Patent Laid-Open No. 2000-77691).

However, in the conventional dye sensitizing solar cell 201 shown in FIG. 15, the efficiency of absorption of light in the metal oxide semiconductor layer 204 is not sufficiently balanced with the moving speed of electrons to the electrode layer 202, so that the photoelectric transfer efficiency is not sufficient.

### SUMMARY OF THE INVENTION

It is therefore an object of the present invention to eliminate the aforementioned problems and to provide a photoelectrode for a dye sensitizing solar cell or organic solar cell having a higher photoelectric transfer efficiency, and a dye sensitizing solar cell having the photoelectrode.

In order to accomplish the aforementioned and other objects, according to one aspect of the present invention, there is provided a photoelectrode for a dye sensitizing solar cell wherein an electrolyte is filled in a space between a counter electrode and the photoelectrode, the photoelectrode comprising: a light permeable substrate having recesses in a surface thereof; and a transparent electrode film formed on the surface of the substrate, the transparent electrode film having recessed portions in a surface thereof.

In the photoelectrode, the transparent electrode film may be formed so as to have a substantially uniform thickness, and the recessed portions of the transparent electrode film may be formed so as to correspond to the recesses of the substrate. The substrate may be made of a resin material. In this case, the substrate may be formed by injection molding.

In the photoelectrode, a porous semiconductor electrode film may be formed in the recessed portions of the transparent electrode film, and the porous semiconductor electrode film may carry a sensitizing dye thereon. In this case, each of the recessed portions of the transparent electrode film may have an inclined portion, and a distance by which electrons in the porous semiconductor electrode film move to the inclined portion when the electrons take the shortest route to the inclined portion may be shorter than a distance by which the electrons in the porous semiconductor electrode film linearly move to a lowest portion of a corresponding one of the recessed portions of the transparent electrode film. Alternatively, each of the recessed portions of the transparent electrode film may have an inclined portion, and a distance by which electrons in the porous semiconductor electrode film move to the inclined portion when the electrons take the shortest route to the inclined portion may be shorter than a distance by which the electrons in the porous semiconductor electrode film linearly move to a lowest end portion of the inclined portion of a corresponding one of the recessed portions of the transparent electrode film.

According to another aspect of the present invention, a dye sensitizing solar cell comprises: the above described photoelectrode; a counter electrode arranged so as to face the photoelectrode; and an electrolyte filled in a space between the photoelectrode and the counter electrode.

According to a further aspect of the present invention, there is provided a photoelectrode for an organic solar cell wherein an electrolyte is filled in a space between a counter electrode and the photoelectrode, the photoelectrode comprising: a light permeable substrate having recesses in a surface thereof; and a transparent electrode film formed on the surface of the substrate, the transparent electrode film having recessed portions in a surface thereof.

In the photoelectrode, the transparent electrode film may be formed so as to have a substantially uniform thickness, and the recessed portions of the transparent electrode film may be formed so as to correspond to the recesses of the substrate. The substrate may be made of a resin material. In this case, the substrate may be formed by injection molding.

In the photoelectrode, a conductive high polymer layer may be formed in the recessed portions of the transparent electrode film. In this case, each of the recessed portions of the transparent electrode film may have an inclined portion, and a distance by which electrons in the conductive high polymer layer move to the inclined portion when the electrons take the shortest route to the inclined portion may be shorter than a distance by which the electrons in the conductive high polymer layer linearlymove to a lowest portion of a corresponding one of the recessed portions of the transparent electrode film. Alternatively, each of the recessed portions of the transparent electrode film may have an inclined portion, and a distance by which electrons in the conductive high polymer layer move to the inclined portion when the electrons take the shortest route to the inclined portion may be shorter than a distance by which the electrons in the conductive high polymer layer linearly move to a lowest end portion of the inclined portion of a corresponding one of the recessed portions of the transparent electrode film.

According to the present invention, since the substrate itself has recesses, the light receiving area (the quantity of light to be incorporated) can be increased to enhance the photoelectric transfer efficiency.

According to the present invention, since electrons in the porous semiconductor electrode film are designed to move so as to take the shortest route to the transparent electrode film, it is possible to decrease the resistance to the movement of electrons in the porous semiconductor electrode film.

According to the present invention, since a distance by which electrons in the porous semiconductor electrode film move to the inclined portions of the recessed portions when the electrons take the shortest route to the inclined portion is shorter than a distance by which the electrons in the porous semiconductor electrode filmmove to the lowest portions of the recessed portions of the transparent electrode film or to the lowest end portions of the inclined portions of the recessed portions, the porous semiconductor electrode film can absorb a sufficient quantity of light, and the electrons in the porous semiconductor electrode film can be rapidly moved to the transparent electrode film, so that is it possible to enhance the photoelectric transfer efficiency.

According to the present invention, since the substrate of the photoelectrode is produced by the injection molding, it is possible to inexpensively mass-produce the photoelectrode.

### BRIEF DESCRIPTION OF THE DRAWINGS

The present invention will be understood more fully from the detailed description given herebelow and from the accompanying drawings of the preferred embodiments of the invention. However, the drawings are not intended to imply limitation of the invention to a specific embodiment, but are for explanation and understanding only.

In the drawings:
FIG. 1 is a schematic sectional view of a preferred embodiment of a dye sensitizing solar cell according to the present invention;
FIG. 2 is a perspective view of a part of a substrate member, from which side portions are cut off to show the shape of recesses;
FIG. 3 is a plan view of a part of a substrate member, which is viewed in the direction of arrow A of FIG. 2;
FIG. 4 is a sectional view of a part of a substrate member taken along line IV-IV of FIG. 3, which is viewed in the direction of arrow B of FIG. 2;
FIG. 5 is a sectional view of a part of a photoelectrode for explaining the operation of a dye sensitizing solar cell;
FIG. 6 is a longitudinal section of a first modified example of a part of a photoelectrode forming a dye sensitizing solar cell according to the present invention;
FIG. 7 is a longitudinal section of a second modified example of a part of a photoelectrode firming a dye sensitizing solar cell according to the present invention;
FIG. 8 is a sectional view of a first example of recesses of a substrate member and recessed portions of a transparent electrode film;
FIG. 9 is a sectional view of a second example of recesses of a substrate member and recessed portions of a transparent electrode film;
FIG. 10 is a plan view of hexagonally pyramidal recessed portions of a transparent electrode film;
FIG. 11 is a plan view of circular conical recessed portions of a transparent electrode film;
FIG. 12 is a longitudinal section of a part of a substrate member, which shows a modified example of recesses of a substrate member forming a dye sensitizing solar cell according to the present invention;
FIG. 13 is a sectional view of a part of a photoelectrode for explaining another example of a dye sensitizing solar cell;
FIG. 14 is a schematic sectional view of a first example of a conventional dye sensitizing solar cell; and
FIG. 15 is a schematic sectional view of a second example of a conventional dye sensitizing solar cell.

### DESCRIPTION OF THE PREFERRED EMBODIMENTS

Referring now to the accompanying drawings, the preferred embodiments of the present invention will be described below in detail.

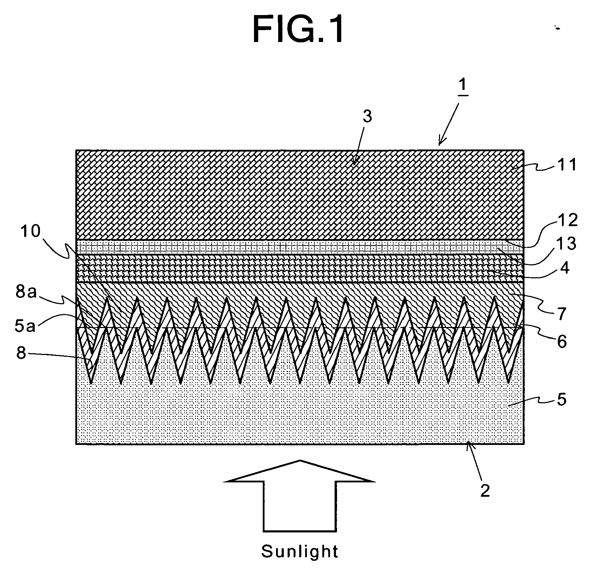

FIG. 1 shows a preferred embodiment of a dye sensitizing solar cell 1 according to the present invention. As shown in FIG. 1, the dye sensitizing solar cell 1 in this preferred embodiment comprises a photoelectrode 2, a counter electrode 3, and an electrolyte 4 filled in a space therebetween.

The photoelectrode 2 comprises a transparent substrate member 5 (a light permeable substrate), a transparent electrode film 6 formed on the upper surface of the substrate member 5 in FIG. 1, a porous semiconductor electrode film 7 formed on the surface of the transparent electrode film 6, and a sensitizing dye absorbed and carried on the porous semiconductor electrode film 7.

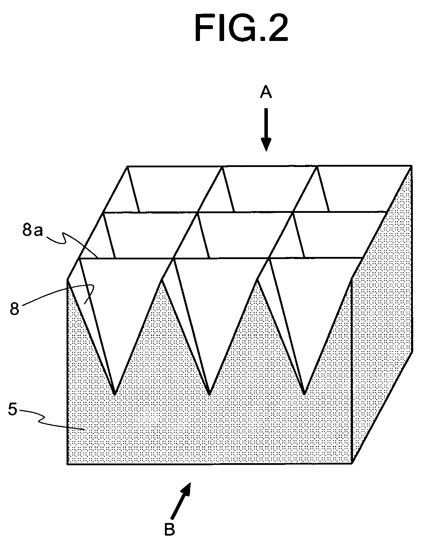

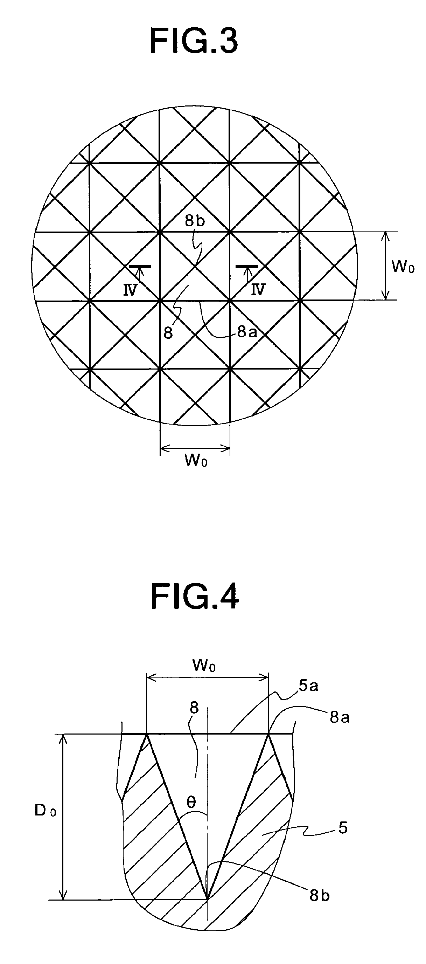

The substrate member 5 may be made of a transparent resin material, such as acrylic resin, polyethylene terephthalate (PET), polyethylene naphthalene (PEN), polyolefineorpolycarbonate (PC) , or a transparent glass material. When a transparent resin material is used, the substrate member 5 may be formed by a molding method, such as the injection molding, thermal compression molding or extrusion molding. On the side of the surface 5a (the upper side in FIG. 1) of the substrate member 5, a large number of substantially rectangular pyramidal recesses 8 are sequentially formed as a matrix so that the sharp tip portions are arranged down (see FIGS. 2 through 4). As shown in FIGS. 3 and 4, the substantially rectangular pyramidal recesses 8 are formed so that W₀ < 2 • D₀ assuming that the depth of each of the recesses 8 is Do and that the width of each of opening portions 8a (the length of one side of each of the opening portions 8a) is W₀. The width of each of the opening portions 8a gradually decreases as a distance from a corresponding one of the bottoms 8b decreases. Furthermore, it is assumed that the vertical angle of each of the substantially rectangular pyramidal recesses is 2θ and that the angle between the center line for dividing the vertical angle into two equal parts and the inclined surface is θ (see FIG. 4) .

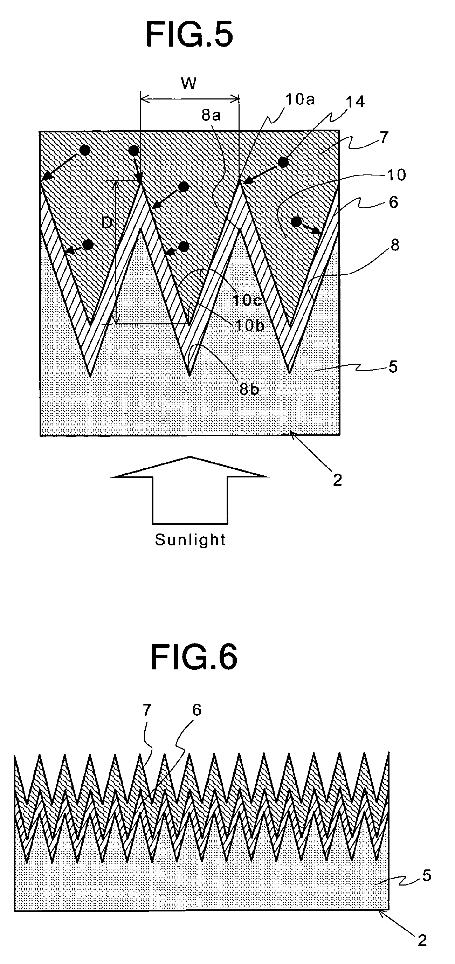

As shown in FIGS. 1 and 5, on the surface (the surface of each of the recesses 8 and the opening portions 8a) of the substrate member 5, the transparent electrode film 6 is formed so as to have a substantially uniform thickness (e.g., 0.07 *µ*m). The transparent electrode film 6 is formed by sputtering. In this sputtering, indium-tin oxide (ITO) is used as a target material. For example, argon gas and oxygen gas are fed into a sputtering apparatus at 100 sccm and 2 sccm, respectively, and the pressure in the apparatus is set to be in the range of from 5 mTorr to 30 mTorr. A power of 1 to 3 kW is applied to the interior of the apparatus to produce plasma. Thus, the transparent electrode film 6 is formed on the surface of the substrate member 5 so as to have a substantially uniform thickness and so as to extend along the recesses 8. As a result, the transparent electrode film 6 has recessed portions 10 which substantially have the same shape as that of the recesses 8 of the substrate member 5 and which are continuously formed as a matrix. The recessed portions 10 formed in the transparent electrode film 6 have a substantially rectangular pyramidal shape similar to the recesses 8 of the substrate member 5. The recessed portions 10 are formed so that W < 2 • D assuming that the depth of each of the recessed portions 10 is D and that the width of each of opening portions 10a (the length of one side of each of opening portions 10a) is W (see FIG. 5).

On the transparent electrode film 6 having such recessed portions 10, the porous semiconductor electrode film 7 of titanium dioxide (TiO₂) or the like is formed so as to be filled in the recessed portions 10 while covering the opening portions 10a of the recessed portions 10 by a predetermined thickness (e.g., 5 *µ* m) (see FIG. 5). The porous semiconductor electrode film 7 is formed by a method comprising the steps of applying a suspension containing semiconductor particles on the transparent electrode film 6, and drying and burning the applied suspension. Then, on the porous semiconductor electrode film 7 thus formed, a sensitizing dye (e.g., ruthenium complex) having a photoelectric transfer function is absorbed and carried. Furthermore, the porous semiconductor electrode film 7 may be formed by the electrolytic deposition method or the hydrothermal treatment method in place of the burning method. The porous semiconductor electrode film 7 may be formed of zinc oxide or the like in place of titanium dioxide.

If the porous semiconductor electrode film 7 of the photoelectrode 2 thus formed is irradiated with sunlight to excite the sensitizing dye carried thereon, electrons 14 of the sensitizing dye move toward the transparent electrode film 6. At this time, a distance by which the electrons 14 of the sensitizing dye move to the inclined portions 10c of the recessed portions 10 when the electrons 14 take the shortest route to the inclined portions 10c is shorter than a distance by which the electrons 14 of the sensitizing dye linearly move to the bottoms (lowest portions) 10b of the recessed portions 10 of the transparent electrode film 6 (see FIG. 5).

As shown in FIG. 1, the counter electrode 3 comprises a counter substrate member 11, and a counter electrode film 13 formed on the surface (the lower surface in the figure) 12 of the counter substrate member 11. The counter substrate member 11 may be formed of a resin material, such as acrylic resin, polyethylene terephthalate (PET), polyethylene naphthalene (PEN), polyolefine orpolycarbonate (PC) , or a glass material. The counter electrode film 13 is formed by coating platinum (Pt) on the surface 12 of the counter substrate member 11. Furthermore, the counter electrode film 13 may use carbon in place of platinum.

The porous semiconductor electrode film 7 of the photoelectrode 2 thus formed is arranged so as to face the counter electrode film 13 of the counter electrode 3 at an interval, and then, the electrolyte 4 is filled in a space between the porous semiconductor electrode film 7 and the counter electrode film 13 to form the dye sensitizing solar cell 1 in this preferred embodiment (see FIG. 1).

Furthermore, as the electrolyte 4, a redox electrolytic solution containing an oxidation-reduction pair, such as an iodine-iodine compound or a bromine-bromine compound, is usually used. The electrolyte 4 may be a solid electrolyte solidified by using a gelling agent or a p-type semiconductor (CuI) , in place of the above described liquid electrolyte.

In the dye sensitizing solar cell 1 thus formed, if sunlight is incident on the photoelectrode 2 from the outside, the sensitizing dye absorbed and carried on the porous semiconductor electrode film 7 is excited to an excited state from an electronic ground state. As shown in FIG. 5, the electrons 14 of the excited sensitizing dye are injected into the conduction band of TiO₂ forming the porous semiconductor electrode film 7, to move so as to substantially take the shortest route to the transparent electrode film 6.

Each of the recessed portions 10 of the transparent electrode film 6 of the photoelectrode 2 in this preferred embodiment has an inverted rectangular pyramidal shape as shown in FIGS. 1 and 5, and is tapered as a distance from a corresponding one of the bottoms 10b decreases. Therefore, in comparison with the conventional dye sensitizing solar cell wherein the rectangular conductive protruding portions 203 are formed on the surface of the electrode layer 202 (see FIG. 15), the thickness of the porous semiconductor electrode film 7 can be sufficiently ensured with respect to the traveling direction of light, so that it is possible to absorb a larger quantity of light and it is possible to shorten the moving distance of the electrons 14 in the porous semiconductor electrode film 7. As a result, according to this preferred embodiment, in comparison with the conventional cell shown in FIG. 15, it is possible to further increase the moving speed of the electrons 14 to the transparent electrode film 6. Therefore, it is possible to decrease the amount of recombination of the electrons 14 with the positive holes, and it is possible to decrease the obstruction to the movement of the electrons 14, so that it is possible to improve the photoelectric transfer efficiency.

Furthermore, in the conventional cell shown in FIG. 15, the distance between the conductive protruding portions 203 and 203 is twice or more as long as the mean thickness of the metal oxide semiconductor layer 204. In addition, in the conventional cell shown in FIG. 15, since each of the conductive protruding portions 203 is rectangular, the thickness of the metal oxide semiconductor layer 204 between the conductive protruding portions 203 and 203 is substantially constant, so that it is difficult to shorten the moving distance of electrons unlike this preferred embodiment. As a result, in the conventional cell shown in FIG. 15, it is not possible to obtain a high photoelectric transfer efficiency which can be obtained in this preferred embodiment.

The electrons 14 moving to the transparent electrode film 6 move to the counter electrode film 13 via an external circuit (not shown). The electrons moving to the counter electrode film 13 are carried on ions in the electrolyte 4 to return to the sensitizing dye. Such an operation is repeated to extract electric energy.

According to the dye sensitizing solar cell 1 with the above described construction, the substrate member 5 has the recesses 8 to increase the light receiving area, so that the quantity of light to be incorporated is increased to improve the photoelectric transfer efficiency (the first advantageous effect). In addition, in the dye sensitizing solar cell 1 in this preferred embodiment, the electrons 14 in the porous semiconductor electrode film 7 can rapidly move to the transparent electrode film 6 as described above. Therefore, it is possible to prevent the recombination of the electrons 14 with the positive holes, and it is possible to decrease the resistance to the movement of the electrons 14, so that it is possible to enhance the photoelectric transfer efficiency (the second advantageous effect) . Therefore, by the synergistic effect of the above described first and second advantageous effects, the dye sensitizing solar cell 1 in this preferred embodiment can generate electricity at a far higher photoelectric transfer efficiency than that in the conventional dye sensitizing solar cell 201 shown in FIG. 15.

If the substrate member 5 and the counter substrate member 11 in this preferred embodiment are formed of a resin material by the injection molding, it is possible to inexpensively mass-produce the photoelectrode 2 and the counter electrode 3.

Furthermore, the dye sensitizing solar cell 1 in this preferred embodiment is designed to cause sunlight to be incident on the substrate member 5, so that the substrate member 5 is made of a transparent plastic material having an excellent light permeability. Therefore, in this preferred embodiment, it is not always required that the counter substrate member 11 is made of a plastic material having an excellent light permeability. However, when the dye sensitizing solar cell 1 is designed to cause sunlight to be incident on the counter substrate member 11, it is required that the counter substrate member 11 is made of a plastic material having an excellent light permeability and that the counter electrode film 13 is transparent. Thus, if the dye sensitizing solar cell 1 is designed to cause sunlight to be incident on the counter substrate member 11, it is not required that the substrate member 5 and the transparent electrode film 6 are made of a material having a good light permeability.

The shape of the porous semiconductor electrode film 7 should not be limited to the shape in the preferred embodiment shown in FIGS. 1 and 5, but the porous semiconductor electrode film 7 may be formed along the transparent electrode film 6 so as to have a substantially uniform thickness as shown in FIG. 6.

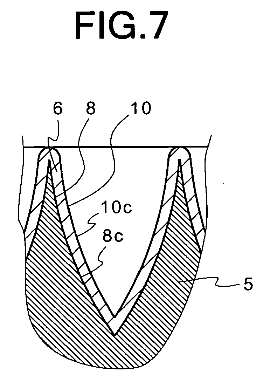

While the cross section of each of the recesses 8 of the substrate member 5 and the recessed portions 10 of the transparent electrode film 6 has been a substantially triangular cross section (see FIGS. 1 and 5) and while each side of each of the rectangular pyramidal recesses 8 and recessed portions 10 has been the linear or flat inclined surface, the present invention should not be limited thereto, but the recesses 8 and recessed portions 10 may have circular-arc-shaped inclined surfaces 8c and 10c as shown in FIG. 7.

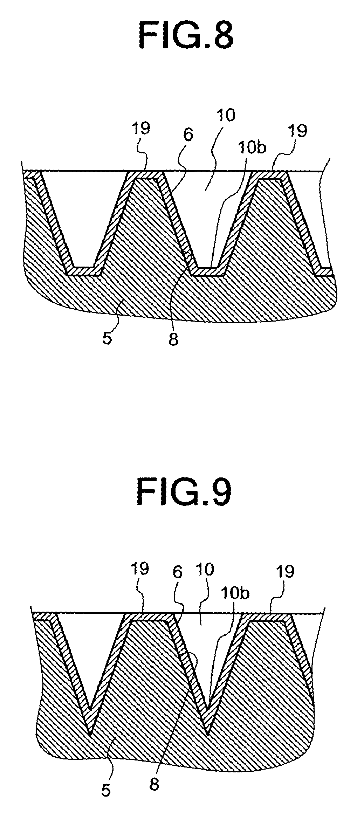

As shown in FIG. 8, each of the recesses 8 of the substrate member 5 and the recessed portions 10 of the transparent electrode film 6 may have a trapezoidal cross section wherein the width thereof (the dimension in horizontal directions in the figure) decreases as a distance from a corresponding one of the bottoms 10b decreases and wherein flat surfaces 19 are formed in the opening portions.

As shown in FIG. 9, each of the recesses 8 of the substrate member 5 and the recessed portions 10 of the transparent electrode film 6 may have a triangular cross section wherein the width thereof (the dimension in horizontal directions in the figure) decreases as a distance from a corresponding one of the bottoms 10b decreases and wherein flat surfaces 19 are formed in the opening portions.

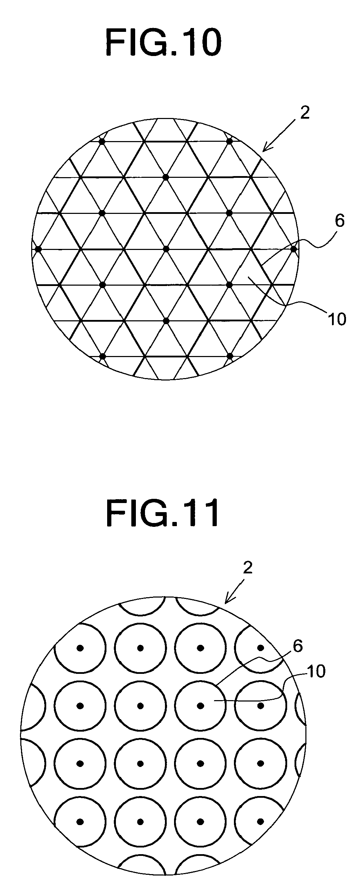

The shape of each of the recessed portions 10 of the transparent electrode film 6 should not be limited to the rectangular pyramid shown in FIG. 5. The shape of each of the recessed portions 10 of the transparent electrode film 6 may be a hexagonal pyramid having a hexagonal planar shape as shown in FIG. 10, or a circular cone having a circular planar shape as shown in FIG. 11. Alternatively, the shape of each of the recessed portions 10 of the transparent electrode film 6 may be a triangular pyramid (not shown) having a triangular planar shape.

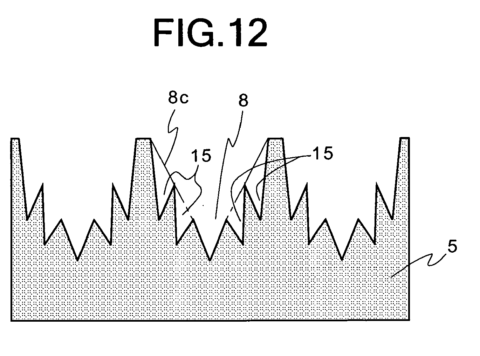

As shown in FIG. 12, each of the recesses 8 of the substrate member 5 may have a cross section wherein a plurality of recesses substantially having a triangular cross section are formed in the inclined surfaces 8c forming a rectangular pyramid. Such a shape can also allow electrons to rapidly move in a porous semiconductor electrode film (not shown).

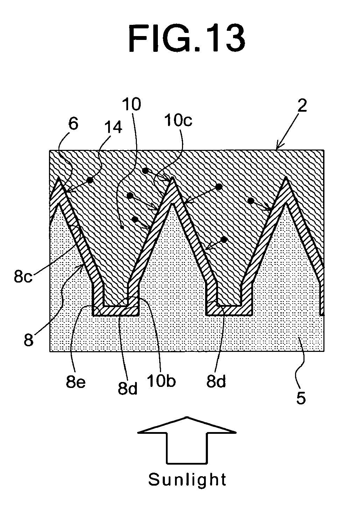

While the cross section of each of the recesses 8 of the substrate member 5 and the recessed portions 10 of the transparent electrode film 6 has been a triangular pyramidal cross section in this preferred embodiment (see FIG. 5), the present invention should not be limited thereto, but only the cross section on the side of each of the bottoms 10b may be rectangular as shown in FIG. 13. In the photoelectrode 2 shown in FIG. 13, the transparent electrode film 6 is formed on the inclined surfaces (inclined portions) 8c, vertical surfaces 8d and bottom surfaces (bottom portions) 8c of each of the recesses 8 of the substrate member 5. Even if the transparent electrode film 6 is thus formed, a distance by which the electrons 14 of the sensitizing dye move to the inclined portions 10c of the recessed portions 10 when the electrons 14 take the shortest route to the inclined portion2 10c is shorter than a distance by which the electrons 14 of the sensitizing dye linearly move to the bottoms (lowest portions) 10b of the recessed portions 10 of the transparent electrode film 6 when the electrons 14 of the sensitizing dye move toward the transparent electrode film 6. Therefore, the dye sensitizing solar cell 1 using the photoelectrode 2 shown in FIG. 13 substantially has the same function as that when the photoelectrode 2 shown in FIG. 5 is used.

While the cross section of each of the recessed portions 10 of the transparent electrode film 6 has been symmetrical with respect to the vertical line in FIGS. 5, 7, 8, 9 and 13, the present invention should not be limited thereto, but the cross section of each of the recessed portions 10 of the transparent electrode film 6 may be asymmetrical with respect to a vertical line.

While the present invention has been applied to the dye sensitizing solar cell in the above described preferred embodiment, the present invention should not be limited thereto. For example, the present invention may be applied to an organic solar cell using a conductive high polymer in place of the dye sensitizing solar cell.

If a plurality of dye sensitizing solar cells in this preferred embodiment are connected to each other in series, or if a plurality of solar cell series, each of which is formed by connecting a plurality of dye sensitizing solar cells in this preferred embodiment to each other in series, are connected to each other in parallel to form a dye sensitizing solar cell assembly, it is possible to obtain electric energy having a desired voltage value. Moreover, if the dye sensitizing solar cell assembly is connected to a storage battery, it is possible to store electric energy.

## Claims

1. A photoelectrode for a dye sensitizing solar cell wherein an electrolyte is filled in a space between a counter electrode and the photoelectrode, said photoelectrode comprising:
a light permeable substrate having recesses in a surface thereof; and
a transparent electrode film formed on the surface of said substrate, said transparent electrode film having recessed portions in a surface thereof.

2. A photoelectrode for a dye sensitizing solar cell as set forth in claim 1, wherein said transparent electrode film is formed so as to have a substantially uniform thickness, and said recessed portions of said transparent electrode film are formed so as to correspond to said recesses of said substrate.

3. A photoelectrode for a dye sensitizing solar cell as set forth in claim 1, wherein said substrate is made of a resin material.

4. A photoelectrode for a dye sensitizing solar cell as set forth in claim 3, wherein said substrate is formed by injection molding.

5. A photoelectrode for a dye sensitizing solar cell as set forth in claim 1, wherein a porous semiconductor electrode film is formed in said recessed portions of said transparent electrode film, and said porous semiconductor electrode film carries a sensitizing dye thereon.

6. A photoelectrode for a dye sensitizing solar cell as set forth in claim 5, wherein each of said recessed portions of said transparent electrode film has an inclined portion, and a distance by which electrons in said porous semiconductor electrode film move to said inclined portion when said electrons take the shortest route to said inclined portion is shorter than a distance by which the electrons in said porous semiconductor electrode film linearly move to a lowest portion of a corresponding one of said recessed portions of said transparent electrode film.

7. A photoelectrode for a dye sensitizing solar cell as set forth in claim 5, wherein each of said recessed portions of said transparent electrode film has an inclined portion, and a distance by which electrons in said porous semiconductor electrode film move to said inclined portion when said electrons take the shortest route to said inclined portion is shorter than a distance by which the electrons in said porous semiconductor electrode film linearly move to a lowest end portion of the inclined portion of a corresponding one of said recessed portions of said transparent electrode film.

8. A dye sensitizing solar cell comprising:
a photoelectrode as set forth in any one of claims 1 through 7;
a counter electrode arranged so as to face said photoelectrode; and
an electrolyte filled in a space between said photoelectrode and said counter electrode.

9. A photoelectrode for an organic solar cell wherein an electrolyte is filled in a space between a counter electrode and the photoelectrode, said photoelectrode comprising:
a light permeable substrate having recesses in a surface thereof; and
a transparent electrode film formed on the surface of said substrate, said transparent electrode film having recessed portions in a surface thereof.

10. A photoelectrode for an organic solar cell as set forth in claim 9, wherein said transparent electrode film is formed so as to have a substantially uniform thickness, and said recessed portions of said transparent electrode film are formed so as to correspond to said recesses of said substrate.

11. A photoelectrode for an organic solar cell as set forth in claim 9, wherein said substrate is made of a resin material.

12. A photoelectrode for an organic solar cell as set forth in claim 11, wherein said substrate is formed by injection molding.

13. A photoelectrode for an organic solar cell as set forth in claim 9, wherein a conductive high polymer layer is formed in said recessed portions of said transparent electrode film.

14. A photoelectrode for an organic solar cell as set forth in claim 13, wherein each of said recessed portions of said transparent electrode film has an inclined portion, and a distance by which electrons in said conductive high polymer layer move to said inclined portion when said electrons take the shortest route to said inclined portion is shorter than a distance by which the electrons in said conductive high polymer layer linearly move to a lowest portion of a corresponding one of said recessed portions of said transparent electrode film.

15. A photoelectrode for an organic solar cell as set forth in claim 13, wherein each of said recessed portions of said transparent electrode film has an inclined portion, and a distance by which electrons in said conductive high polymer layer move to said inclined portion when said electrons take the shortest route to said inclined portion is shorter than a distance by which the electrons in said conductive high polymer layer linearly move to a lowest end portion of the inclined portion of a corresponding one of said recessed portions of said transparent electrode film.
